# EUROPEAN PATENT APPLICATION

(11) **EP 1 213 680 A2**
(43) Date of publication of application: **12.06.2002**
(21) Application number: 01306128.8
(22) Date of filing: 17.07.2001
(51) Int. Cl.: G06K 7/00

(54) **Electronic device with a card reader and connector assembly**

(30) Priority: 30.11.2000 US 728578
(71) Applicant: AVX CORPORATION, Myrtle Beach, South Carolina 29578 (US)
(72) Inventor: Bishop, Peter, Isleham, Cambridgeshire CB7 5SQ (GB); Rippington, David, Stetchworth, Newmarket CB8 9TS (GB)
(74) Representative: Gray, James

(57) **Abstract**

A card reader for an electronic communications device, such as a cellular telephone (11), is disclosed. The reader comprises a housing (12) which contains more than one set of electrical contacts. The reader comprises at least one card holder slide assembly adapted to receive a first electronic subscriber identification module (SIM) card (22). Such SIM cards may be inserted into the card holder slide assembly for insertion Into the telephone to place the SIM cards in registration with electrical contacts in the housing. Thus, the telephone has the capability to operate with at least two SIM cards, thus enabling a single telephone to use two telephone numbers.

## Description

### Background of the Invention

In cellular telephone systems such as the Global System for Mobile Communications (GSM) used in Europe, a subscriber identification module (SIM) card is inserted into the handset of the telephone. The SIM card contains electronically stored information concerning the operation of the telephone. The SIM typically comprises a smart card that is inserted into a GSM telephone to facilitate operation of the telephone.

Cellular telephone communication systems typically include a subscriber unit which is assigned a mobile subscriber (MSI) number that uniquely identifies the subscriber unit from other subscriber units. For example, in Europe a cellular communication system identifier known as the International Mobile Subscriber Identification Number (IMSI) is employed.

In a cellular system requiring the use of SIM cards, subscriber account identification information for a given user is stored on his or her SIM card rather than within the cellular telephone. This is beneficial because any telephone configured to receive a SIM card may be operated by the user using his or her account. Thus, a user has an account which is electronically coded into his or her SIM card, and that user may employ his or her SIM card when operating any other cellular telephone that is configured for SIM card use.

When using the SIM features, a user is not constrained to carry his own personal communications device with him at all times. That is, a SIM provides the opportunily to use a generic, non-user specific mobile telephone handset. Thus, when using a SIM card, there is no need to have a user specific device such as a conventional wireline phone or a conventional non-GSM cellular phone. In a network where you have one user - one number, this system is desirable.

To accommodate and utilize an electronic card, such as a SIM card, cellular telephones employ card readers to electrically and mechanically interface to the card. It is necessary to ensure reliable connectivity, and such card readers must secure the card to the device using a connector mechanism.

There are many situations which arise in which there is only one communications device and yet several people wish to use the device. For example, it is very convenient if two people can both use the same cellular telephone handset, but use different SIM cards with different account information. Sometimes, it is convenient for each person to have their own number, and a person would like to be contacted or reached using his own personal telephone number and account information contained on his or her SIM card. For example, for home use, one spouse may have a personal universal number, and the other spouse may have yet another number, In some cases, it is convenient for each teenage son or daughter to have their own number. Thus, it is clearly undesirable for each person to have their own telephone that rings only their number when at home. Obviously, it would be desirable if each person could have their own account number information, and yet utilize only one cellular telephone for the family.

In other situations, such as when several people travel together, each person may have their SIM card providing their own unique and secure communications, but all persons may wish to receive calls addressed to their individual SIM which are received on a single car phone. In some applications, it may be desirable for a person to have two universal numbers, one for personal communications, and one for work communications. Furthermore, there may be situations in which a person would like all their work related telephone calls to be billed using one SIM card, and their personal calls to be billed using a second SIM card. In most cases, it is unlikely that a person would find it desirable to have a single telephone number used for both work and personal life, as most people prefer to separate these two functions. However, it is a wasteful and costly duplication of electronics to require that a person have two different cellular telephones in order to accomplish this end result.

United States Patent No. 6,062,887 to Schuster et al. is directed to an electronic device, such as a cellular telephone, which can accommodate a SIM card and a flash memory card. In the device, a dual card reader with two sets of contacts carried on a reader housing includes a drawer adapted for receipt of a SIM card and a flash memory card. Thus, the apparatus disclosed in the Schuster patent is directed to a drawer which is adapted to receive a SIM card having a first size and a second electronic flash memory card having a second size which is different from the size of the SIM card. In the apparatus, both cards are placed in the same drawer to reduce space requirements.

United States Patent No. 5,987,325 to Tayloe describes a system for controlling access to a telephone using two SIM cards. The disclosure includes a flow chart showing how a telephone could operate to employ two SIM cards, but there is no disclosure in the Tayloe patent showing what sort of connector structures or other apparatus could be utilized to implement the system.

What is needed in the industry is an apparatus and a method for accommodating two different SIM electronic cards in one telephone. That is, a cellular telephone which is capable of receiving two separate SIM cards simultaneously would be very useful, facilitating the use of one telephone by two or more users in a convenient and organized way. Furthermore, a cellular telephone device that is capable of receiving more than one SIM card with only minimal increase in volume and weight would be very desirable.

### Summary of the Invention

The invention includes several advantages and improvements not disclosed or contained within the prior art, in one aspect of the invention, a card reader is provided comprising a housing, the housing being supplied with a first set and a second set of electrical contacts carried upon the housing. Furthermore, a first and a second card holder slide assembly is provided to receive one or more electronic cards.

In another aspect of the invention, the card reader is provided for interaction with a first electronic card that comprises a subscriber identity module (SIM) type card. In some applications, the card reader includes first and second electronic cards which each comprise subscriber identity module (SIM) type cards. The card reader also may employ first and second electronic cards that are substantially the same size. A card reader also may be provided in which a first set of electrical contacts and a second set of electrical contacts are carried upon a common electrical assembly.

The electrical contacts may in some instances comprise elongated contact elements. In some applications of the invention, the elongated contact elements comprise curved, resilient contact tips adapted for electrical communication with said electronic cards.

The card reader also is provided wherein the elongated contact elements electrically engage first and second electronic cards at multiple contact points.

Some applications of the invention will include an electronic card reader which also includes first and second card holder slide assemblies. The slide assemblies each may comprise a flat base with a plurality of side walls, further wherein the first and second SIM cards each are adapted for placement in a position upon the flat base of the first and second card holder slide assemblies so that the SIM cards are oriented substantially between side walls, and located securely within said holder slide assemblies.

In some applications of the invention, an electronic card reader having at least one card holder slide assembly comprising an aperture or window is shown. The electronic card reader may be provided with a first set of electrical contacts that are elongated and are provided in a substantially parallel arrangement.

In other applications, the electronic card reader is provided having elongated electrical contacts, each of which comprise a proximal end and a distal end, wherein the distal ends of said contacts are curved to facilitate resilient engagement with SIM cards.

In other embodiments of the invention, electronic card readers are provided having a first set of electrical contacts that are curved in a first direction, and a second set of electrical contacts curved in a second direction. In this way, it is possible to facilitate an arrangement of said first and second SIM cards that places the SIM cards in opposed relation to each other within the housing.

In certain embodiments of the invention, an electronic card reader is provided in which the first and second SIM cards are substantially parallel to each other when installed in an electronic card reader. The electronic card reader may have a third set of electrical contacts and a fourth set of electrical contacts, further wherein the third set of electrical contacts are provided for engagement with a first SIM card and the fourth set of electronic contacts are provided for engagement with a second SIM card.

The electronic card reader of the invention also may include electrical contacts for engaging SIM cards, in which two sets of contacts are provided in two different lengths.

At least one embodiment of the invention provide a method of engaging an electronic subscriber identification module (SIM) card to a mobile communications device, such as a telephone.

One embodiment of the invention includes a system for connecting more than one SIM card to a telephone, in which the system comprises a telephone having a housing and an electrical assembly. The assembly comprises a first set of electrical contacts and a second set of electrical contacts carried within the housing. Furthermore, a first card holder slide assembly is adapted to receive a first subscriber identity module (SIM) electronic card. A second card holder slide assembly also is adapted to receive a second subscriber identity module (SIM) electronic card. Further, a first set of electrical contacts are adapted to engage the first SIM card, and the second set of electrical contacts are adapted to engage the second SIM card.

### Brief Description of the Drawings

A full and enabling disclosure of this invention, including the best mode shown to one of ordinary skill in the art, is set forth in this specification. The following Figures illustrate the invention:
Figure 1 is a perspective view of a mobile telephone showing the configuration of two card holder slide assemblies adapted to fit into the telephone;
Figure 2 shows a portion of the interior housing of a communications device;
Figure 3 depicts the top view of the housing shown in Figure 2;
Figure 3A shows the side view of the housing shown in Figure 3;
Figure 3B shows a perspective view of a card holder slide assembly, with a SIM card poised for Insertion into the slide assembly;
Figure 4 shows the underside of the housing shown in Figure 2;
Figure 4A is an end view of the housing shown in Figure 4;
Figure 5 is a perspective view of the electrical contact arrangement;
Figure 5A is a top view of the electrical contact assembly of Figure 5;
Figure 5B is an end view of the assembly shown in Figure 5A; and
Figure 5C is a side view of the electrical contact assembly with the housing shown in dashed lines.

### Detailed Description of the Invention

Reference now will be made to the embodiments of the invention, one or more examples of which are set forth below. Each example is provided by way of explanation of the invention, not as a limitation of the invention. In fact, it will be apparent to those skilled in the art that various modifications and variations can be made in this invention without departing from the scope or spirit of the invention. For instance, features illustrated or described as part of one embodiment can be used on another embodiment to yield a still further embodiment. Thus, it is intended that the present invention cover such modifications and variations as come within the scope of the appended claims and their equivalents. Other objects, features and aspects of the present invention are disclosed in or are obvious from the following detailed description. It is to be understood by one of ordinary skill in the art that the present discussion is a description of exemplary embodiments only, and is not intended as limiting the broader aspects of the present invention, which broader aspects are embodied in the exemplary constructions.

In accordance with the invention, a communications device is provided with the capability to accept multiple SIM cards, each with their own user specific encryption algorithms. Furthermore, as one or more different SIM cards are inserted in the communications device, the device may keep track of the encryption necessary for each user or card.

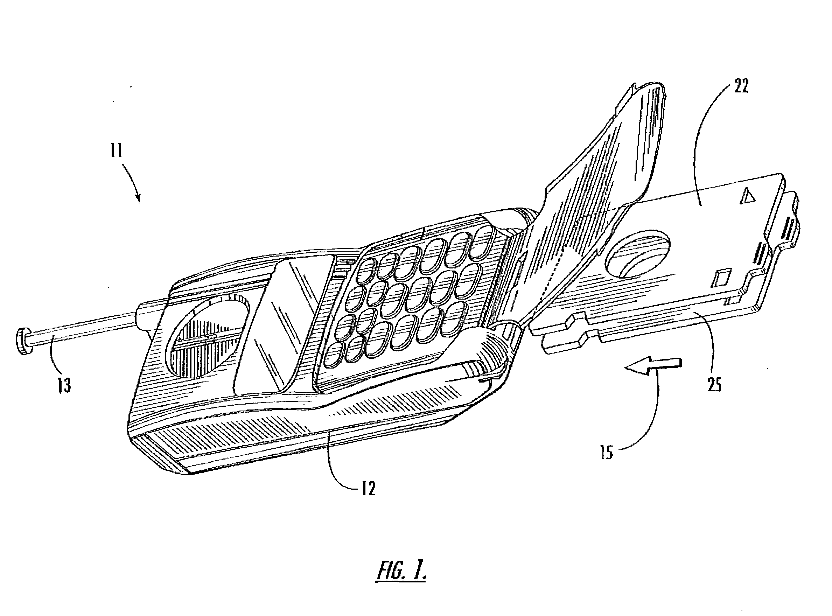

As show in Figure 1, a cellular telephone 11 is shown having a handset 12 with an antenna 13 mounted on the top portion of the telephone. Near the base or bottom of the telephone, a first SIM card holder 22 and a second SIM card holder 25 are shown oriented for insertion into the cellular telephone 11. The first SIM card holder 22 and second SIM Card holder 25 are inserted into the cellular telephone 11 in the direction shown at direction arrow 15.

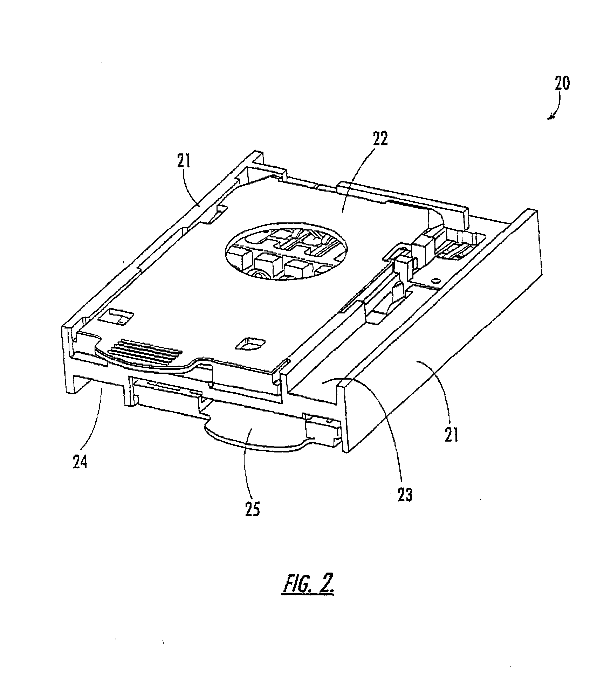

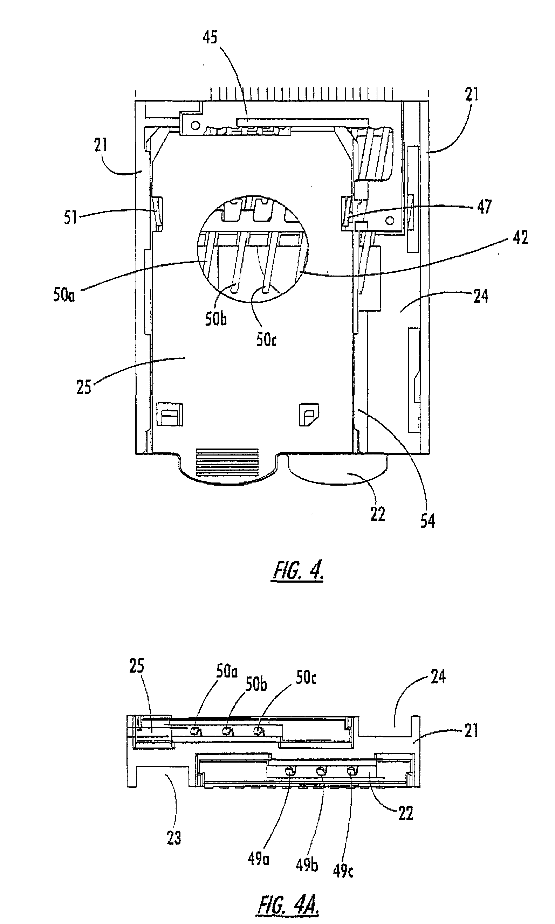

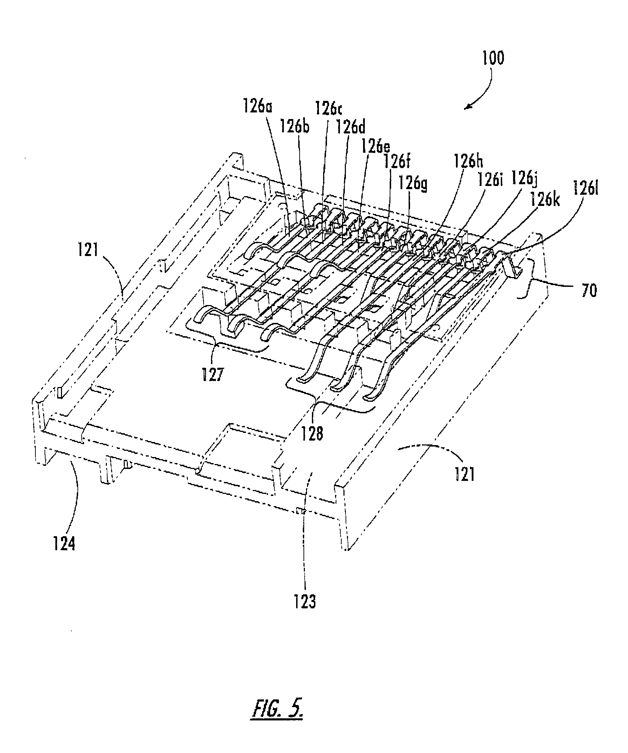

Figure 2 shows a perspective view of a portion of the internal housing of the cellular telephone 11 including an outer frame 21. Figure 2 shows a perspective view of a card reader housing 20. The outer frame 21 receives the first SIM card holder 22 and the second SIM card holder 25 when they are inserted into the cellular telephone 11. Furthermore, a first channel 23 and a second channel 24 (which may be seen in Figure 4) reside along the side of the SIM card holders 22 and 25, respectively.

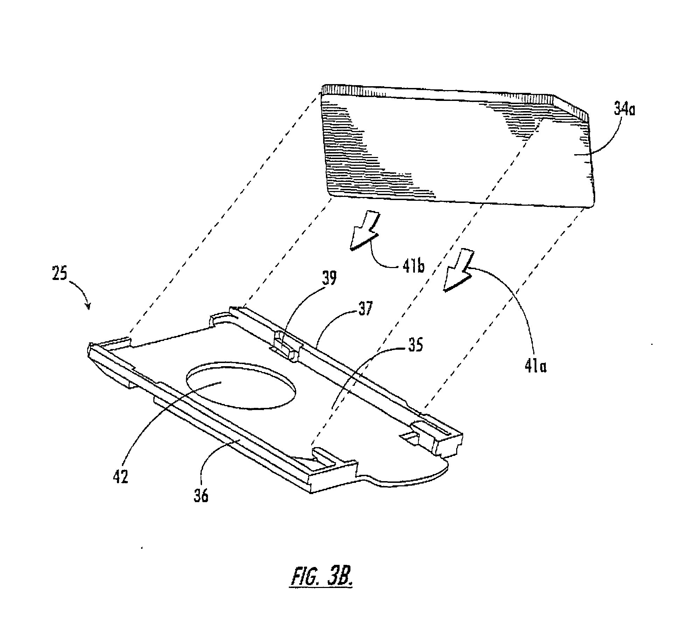

Turning now to Figure 3, a top view of the card reader housing 20 from Figure 2 is shown in Figure 3. In the top view, the first SIM card holder 22 is seen inserted into the frame 21. The first SIM card holder 22 is surrounded by an end panel 28 and side wall 29. A support bracket 27 may be seen through the aperture or contact window of SIM card holder 22. A first set of electrical contacts positioned to engage a SIM card are shown as contacts 30a, 30b, and 30c. In the configuration of Figure 3, there is no SIM card installed into the SIM card holder 22, and therefore it is possible to look through the aperture window 26 to view the first set of electrical contacts 30a-c.

In Figure 3A, a side view of the apparatus shown in Figure 3 reveals the outer frame 21, and the first SIM card holder 22 and second SIM card holder 25 emerging from the lower portion of the frame 21. In Figure 3, the positioning lever 39 also is seen which flexibly pushes against a SIM card when it is residing in the SIM card holder to retain the card in position.

Figure 3B shows the second SIM card holder 25 removed from the frame and assembly. It includes a base 35 of the holder which includes a first side 36 and a second side 37 which serve to provide a means to frictionally contact the SIM card 34a and push the SIM card out from the holder. Contact pads on the SIM card are on the opposite side of the SIM card holder, as further discussed herein. In Figure 3B, the SIM card 34a is shown poised for Insertion into the second SIM card holder 25, and the card is placed into the second SIM card holder 25 along direction arrows 41a and 41b. When the SIM card 34a is inserted into the second SIM card holder 25, the card engages positioning lever 39 which serves to retain the SIM card 34a in position. A second SIM card 34b fits within the first SIM card holder 22, but is not shown in Figure 3B.

Figure 4 shows a bottom view of the card reader housing 20 shown in Figure 2. The second SIM card holder 25 is shown inserted into the frame 21. An end panel 25 receives the end of the SIM card when it is inserted into the second SIM card holder 25 (SIM card not shown in Figure 4). A first electrical contact set 50a-c is seen through the contact window 42. On either side of the second SIM card holder 25, one can see positioning lever 47 and positioning lever 51 which flexibly engage the sides of a SIM card and serve to retain the SIM card when it is inserted within the second SIM card holder 25. A second channel 24 is evident along the right side of Figure 4. Furthermore, side wall 54 is shown, which serves as a guide and contact surface for the SIM card when it is inserted into the second SIM card holder 25.

In Figure 4A, an end view of the second SIM card holder 25 of Figure 4 is shown. In Figure 4A, a first set of electrical contacts 40a-c are shown engaging the underside of a SIM card when the card is inserted into the frame 21. Furthermore, in the lower portion of Figure 4A, a second contact set 49a-c is shown that interacts downwardly upon a SIM card when a SIM card is inserted within the first SIM card holder 22.

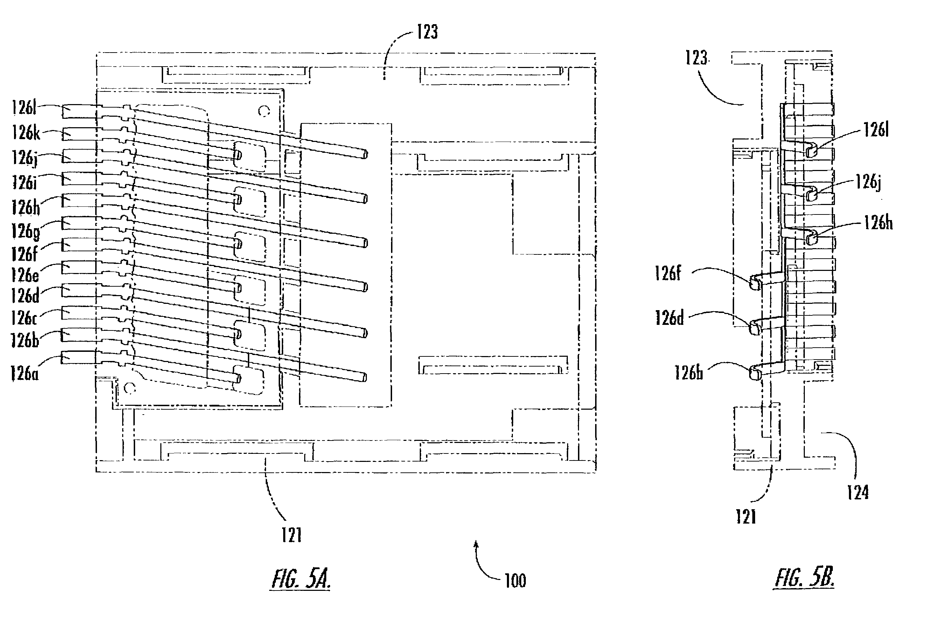

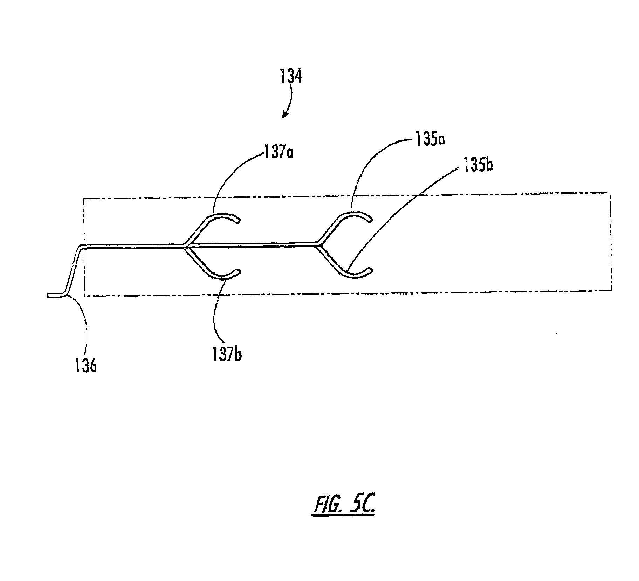

A perspective view of the electrical contact assembly in one aspect of the invention is shown in Figure 5. In Figure 5, a common electrical assembly 70 contains multiple elongated electrical contacts aligned in a row. The elongated electrical contacts vary in length, being designed such that each set of electrical contacts is of the appropriate length to engage contact pads upon the surface of a SIM card when a SIM card is inserted into either the first SIM card holder 22 or the second SIM card holder 25. For example, a first set 127 of electrical contacts is shown near the center of Figure 5, and a second set 128 of electrical contacts is shown near the right portion of Figure 5. The electrical contacts are shown as contacts 126a-I from left to right in Figure 5. The frame 121 is shown in dotted lines, and a first channel 123 and a second channel 124 are also seen in the Figure. Of course, other electrical contact arrangements are possible, and for purposes of the invention it is necessary only that the electrical contacts be oriented to flexibly engage contact pads on the surface of SIM card 34a or 34b when such SIM cards are inserted within the SIM card holders.

In Figure 5A, a top view of the electrical contact assembly 100 is shown. In the Figure, electrical contacts 126a-I are shown aligned in parallel fashion, with the length of the contacts chosen such that a contact set is oriented properly for contact with a SIM card inserted and positioned within the frame 121.

In Figure 5B, an end view of the electrical contact assembly 100 is shown. It can be seen that a first set of electrical contacts 126h, 126j, and 126l are oriented along one direction for flexible engagement with a SIM card. Likewise, a second set of electrical contacts 126b, 126d, and 126f are aligned and oriented in position to contact a second SIM card.

Figure 5C shows a side view of the electrical contact layout 134 with the frame removed for easy viewing of the electrical contacts. Contact tail 136 is shown, which connects to a short contact nose 137a and 137b, which are directed in opposite directions from the center line of the electrical contact assembly. Likewise, SIM contact nose 135a and SIM contact nose 135b are oriented in a direction away from the center line of the contact layout 134,

In each embodiment of the invention, the SIM card holders are provided and slidably pushed into the housing of the cellular telephone for electrical engagement. In most applications of the invention, the electrical contacts are elongated and are provided in a substantially parallel arrangement, As shown in many of the Figures, the electrical contacts typically comprise a proximal end and a distal end, wherein the distal ends of the contact elements are curved to facilitate resilient engagement with the respective SIM cards. Also, each set of electrical contacts is provided in the appropriate length to interact with SIM cards.

In general, SIM cards have a standard electrical format with contact pads oriented in a certain predetermined and known arrangement.

In most applications of the invention, the first SIM card 34a and the second SIM card 34b are provided with an identical size specification, such that any SIM card having the standard dimensions and characteristics may be inserted into either of the SIM card holders. In most cases, the SIM card is a plug-in SIM card defined in the GSM specification 11.11-version 3.15.0. That is, the electronic card has a housing containing a microprocessor and electronically erasable programable read only memory (EEPROM) for storing user subscriber account identification information. Furthermore, although not shown in the Figures, a set of metallic pads is carried on the electronic card to facilitate external access to the microprocessor. In a typical embodiment, the housing is dimensioned to have a length of about 25 mm, a width of about 15 mm and a thickness of about 0.8mm. Furthermore, the set of pads is a set of pads which are designed according to the standard GSM specifications.

In most instances, the card reader housing is molded from a plastic resin or other suitable nonconductive material. The electrical contact elements may be comprised of any suitable conductor, including standard metallic type conductors.

In most cases, a cellular or radio telephone communication system includes a fixed site transceiver which transmits and receives radio frequency (RF) signals to and from mobile and portable radio telephones located within a fixed geographic service area. The RF signal transmitter between the fixed site transceiver and the portable radio telephone include date or voice signals, subscriber identification, and billing information. Billing information may be sent from the portable radio telephone or cellular telephone to a fixed site transceiver, and stored in a memory contained on SIM cards. Each SIM card may be a full size or a chip size smart card.

In accordance with this invention, a person may accept calls at a single communication device for either his personal telephone number, his work telephone number, or both. To employ the invention, the user simply inserts the appropriate SIM card into respective SIM card holders. It is desirable for a common telephone to accept multiple universal numbers (SIMs) each having its own secure communications data base. For example, the situation of "work at home" employees having a SIM with a work related, secure, universal number provides the need for a device as shown in the invention.

Several different people each with a different SIM card may receive secure telephone calls on a common communications device on a dynamic basis. Given the one number, one person environment where a number follows a person everywhere, both on wireline and wireless systems, a secure device as shown in the invention is desirable. The invention, therefore, provides a process of handling multiple secure numbers for each user (work/business/personal) as well as multiple users per secure communications unit. That is, a family with several different personal numbers may use one communications unit, but several SIM cards.

The invention is not limited to accepting only two SIM cards, and a person in the skill of the art could employ this invention by providing a cellular telephone handset capable of receiving three or more SIM cards, Thus, the invention also contemplates a cellular telephone having three or more SIM cards, each of which is of about the same dimension and specification. In general, when an outgoing call is to be made, the user selects which SIM against which to place the call. Preferences for the SIM card to be used may be either automatically applied, or manually instructed by the user. In most cases, security is provided encrypting or decoding the incoming and outgoing voice data and/or subscriber identification data. In most cases, when a SIM card is removed, the user is de-registered with the network with which it was connected.

In some applications of the invention, it is possible to employ a plurality of SIM cards with a flash memory card or other multimedia card (MMC). For example, such multimedia cards are used to store the telephone directory of a major city, or the complete text of news stories transmitted to the cellular phone, or may include voice recognition features, voice recording functions, or in some cases may serve as a personal organizer. Thus, in some applications of the invention it may be possible to employ a cellular telephone handset which is capable of receiving and electronically communicating simultaneously with two SIM cards, and one or more flash memory cards.

It is understood by one of ordinary skill in the art that the present discussion is a description of exemplary embodiments only, and is not intended as limiting the broader aspects of the present invention, which broader aspects are embodied in the exemplary constructions. The invention is shown by example in the appended claims.

## Claims

1. A card reader comprising:
a housing;
a first set of electrical contacts carried upon the housing;
a second set of electrical contacts carried upon the housing;
a first card holder slide assembly adapted to receive a first electronic card; and
a second card holder slide assembly adapted to receive a second electronic card.

2. The card reader set forth in claim 1 wherein the first electronic card comprises a subscriber identity module (SIM) card.

3. The card reader set forth in claim 1 wherein both the first and second electronic cards comprise subscriber identity module (SIM) cards.

4. The card reader set forth in claim 3 wherein the first and second electronic cards are substantially the same size.

5. The card reader set forth in claim 3 or claim 4 wherein the first set of electrical contacts and the second set of electrical contacts are carried upon a common electrical assembly.

6. The card reader of any preceding claim in which the electrical contacts comprise elongated contact elements.

7. The card reader of claim 6 in which the elongated contact elements further comprise curved, resilient contact tips adapted for electrical communication with said electronic cards.

8. The card reader of claim 6 or claim 7 wherein the elongated contact elements electrically engage said first and second electronic cards at multiple contact points.

9. The card reader of any preceding claim in which the reader operates in a cellular telephone.

10. An electronic card reader for a mobile communications device, comprising:
a housing;
an electrical assembly, the assembly comprising a first set of electrical contacts and a second set of electrical contacts carried upon the housing, further wherein said electrical contacts are adapted for flexible engagement;
a first card holder slide assembly adapted to receive a first subscriber identity module (SIM) electronic card;
a second card holder slide assembly adapted to receive a second subscriber identity module (SIM) electronic card;
wherein the first set of electrical contacts engage the first SIM card and the second set of electrical contacts engage the second SIM card.

11. The electronic card reader of claim 10 further wherein the first card holder slide assembly and the second card holder slide assembly are configured to slidably engage said housing.

12. The electronic card reader of claim 10 or claim 11 in which the SIM cards are substantially rectangular in shape.

13. The electronic card reader of any of claims 10 to 12 further wherein said first and second card holder slide assemblies each comprise a flat base with a plurality of side walls, further wherein the first and second SIM cards each are adapted for placement in a position upon the flat base of the first and second card holder slide assemblies, respectively, such that the SIM cards are oriented substantially between side walls and securely within said holder slide assemblies.

14. The electronic card reader of any of claims 10 to 13 wherein at least one card holder slide assembly comprises an aperture window.

15. The electronic card reader of any of claims 10 to 14 further wherein said first set of electrical contacts are elongated and are provided in a substantially parallel arrangement.

16. The electronic card reader of claim 15 further wherein the elongated electrical contacts each comprise a proximal end and a distal end, wherein the distal ends of said elements are curved to facilitate resilient engagement with said SIM cards.

17. The electronic card reader of claim 16 wherein the first set of electrical contacts are curved in a first direction, and the second set of electrical contacts are curved in a second direction, thereby facilitating an arrangement of said first and second SIM cards in opposed relation to each other within said housing.

18. The electronic card reader of claim 17 in which the first and second SIM cards are substantially parallel to each other when installed in the electronic card reader.

19. The electronic card reader of claim 18 further comprising a third set of electrical contacts and a fourth set of electrical contacts, further wherein said third set of electrical contacts are provided for engagement with said first SIM card, and said fourth set of electronic contacts are provided for engagement with said second SIM card.

20. The electronic card reader of claim 19 wherein said first set of electrical contacts have a first length, and said third set of electrical contacts have a second length different from the first length.

21. A method of engaging an electronic subscriber identification module (SIM) card to a mobile communications device, comprising:
providing a housing;
providing a first set of electrical contacts carried upon the housing;
providing a second set of electrical contacts carried upon the housing;
providing a first card holder slide assembly adapted to receive a first SIM card; and
providing a second card holder slide assembly adapted to receive a second SIM card;
inserting the first SIM card into the first card holder slide assembly to form a first loaded slide assembly;
placing the first loaded slide assembly into operative position within the housing; and
engaging the first set of electrical contacts with the first SIM card.

22. The method of claim 21 further comprising the following steps:
inserting the second SIM card into the second card holder slide assembly to form a second loaded slide assembly;
placing the second loaded slide assembly into operative position within the housing; and
engaging the second set of electrical contacts with the second SIM card.

23. A system for connecting more than one SIM card to a telephone, said system comprising:
a telephone having a housing;
an electrical assembly, the assembly comprising a first set of electrical contacts and a second set of electrical contacts carried within the housing;
a first card holder slide assembly adapted to receive a first subscriber identity module (SIM) electronic card;
a second card holder slide assembly adapted to receive a second subscriber identity module (SiM) electronic card;
wherein the first set of electrical contacts engage the first SIM card and the second set of electrical contacts engage the second SIM card.

24. The system of claim 23 further wherein the first card holder slide assembly and the second card holder slide assembly are configured to slidably engage said housing.

25. The system of claim 23 in which the SIM cards are substantially rectangular in shape.

26. The system of claim 23 further wherein said first and second card holder slide assemblies each comprise a flat base with a plurality of side walls, further wherein the first and second SIM cards each are adapted for placement in a position upon the flat base of the first and second card holder slide assemblies, respectively, such that the SIM cards are oriented substantially between side walls and securely within said holder slide assemblies.

27. The system of claim 23 wherein at least one card holder slide assembly a window.

28. The system of claim 23 further wherein said first set of electrical contacts are elongated and are provided in a substantially parallel arrangement.

29. The system of claim 28 further wherein the elongated electrical contacts each comprise a proximal end and a distal end, wherein the distal ends of said elements are curved to facilitate resilient engagement with said SIM cards.

30. The system of claim 29 wherein the first set of electrical contacts are curved in a first direction, and the second set of electrical contacts are curved in a second direction, thereby facilitating an arrangement of said first and second SIM cards in opposed relation to each other within said housing.

31. The system of claim 30 in which the first and second SIM cards are substantially parallel to each other when installed in the electronic card reader.

32. The system of claim 31 further comprising a third set of electrical contacts and a fourth set of electrical contacts, further wherein said third set of electrical contacts are provided for engagement with said first SIM card, and said fourth set of electronic contacts are provided for engagement with said second SIM card.

33. The system of claim 32 wherein said first set of electrical contacts have a first length, and said third set of electrical contacts have a second length different from the first length.
